Europäisches Patentamt

(19)  European Patent Office    (11) Publication number: **0 146 884**

Office européen des brevets                                    **B1**

(12)  **EUROPEAN PATENT SPECIFICATION**

(45) Date of publication of patent specification: **29.04.87**   (51) Int. Cl.⁴: **B 60 J 1/20**

(21) Application number: **84115297.8**

(22) Date of filing: **12.12.84**

(54) **Adjustable air shield for the windows of motor vehicles.**

(30) Priority: **21.12.83 IT 2391483 u**

(43) Date of publication of application:
**03.07.85 Bulletin 85/27**

(45) Publication of the grant of the patent:
**29.04.87 Bulletin 87/18**

(84) Designated Contracting States:
**AT BE CH DE FR GB LI**

(56) References cited:
**EP-A-0 005 358**
**FR-A-2 443 941**
**GB-A- 609 577**
**GB-A- 787 228**
**US-A-1 942 225**
**US-A-3 726 207**

(73) Proprietor: **Masi, Lamberto**
**Via Newton 9**
**I-20016 Pero Milano (IT)**

(72) Inventor: **Masi, Lamberto**
**Via Newton 9**
**I-20016 Pero Milano (IT)**

(74) Representative: **Petruzzelli, Antonio**
**Via E. De Amicis No. 25**
**I-20123 Milan (IT)**

Courier Press, Leamington Spa, England.

## Description

The invention concerns an air shield suitable for use on the windows of the front doors of motor vehicles by being fitted onto the upper horizontal edge and downward sloping fore edge of the window itself.

From the patent GB 609.577 and from the patent application FP—A—2.443.941, there are known air shields fitted on the windows of the front doors of motor vehicles, which allow the window to be partially opened whilst preventing water or strong currents of air from entering the vehicle while it is moving. The air shields currently in use are substantially made in a single piece from moulded plastic material to adapt to the shape and dimensions of the window; consequently, they must be specially produced for each type of vehicle due to the fact that the slope of the fore edge of the window, with respect to its horizontal and upper edge, and the dimensions themselves, vary from vehicle to vehicle. Therefore, both the manufacturers of accessories for motor vehicles and dealers in the same articles, must take in a sufficient stock of air shields with so many of each kind, according to the types of motor vehicles in circulation.

Also known, from patent GB 609,577, is an air shield made in two parts which are firmly secured together and to the edge of the window, by means of a peripheral section and an intermediate connecting section. In this case too, the shield is of a shape which adapts exactly ato the shape of the window, with no possibility whatsoever of adjusting the inclination of the two parts or the overall length of the shield itself.

A scope of this invention is, therefore, to provide a single type of air shield, of the aforesaid kind, which is capable of adapting to the shapes and sizes of the windows of any given type of motor vehicle.

A further scope of this invention is to provide an air shield, as described, made of separate parts which can be fitted together at the moment of use and which can consequently be packed and shipped in extremely compact conditions.

These scopes are achieved by means of an air shield as claimed in claim 1.

The invention will be described in greater detail hereunder, with reference to the accompanying drawings, in which:

Fig. 1 shows a side view of a generic motor vehicle fitted with the air shield according to this invention;

Fig. 2 shows an enlarged cross-sectional view along the line 2—2 of figure 1;

Fig. 3 shows an enlarged detail of the air shield of figure 1;

Fig. 4 shows a longitudinal cross-sectional view along the line 4—4 of figure 3;

Fig. 5 shows a view similar to that of figure 3, for an alternative embodiment;

Fig. 6 shows an exploded view of the parts of the shield of figure 5;

Fig. 7 shows a cross-sectional view along the line 7—7 of figure 6;

Fig. 8 shows an enlarged cross-sectional view of the hinge joint, along the line 8—8 of figure 5;

Fig. 9 shows a cross-sectional view of an enlarged detail fo the right end of the rear portion of the shield of figure 5;

Fig. 10 shows a cross-sectional view along the line 10—10 of figure 5;

Fig. 11 shows a longitudinal sectional view along the line 11—11 of figure 5;

Fig. 12 shows a partial view of a shield similar to that of the previous figures, with a modified hinge joint;

Fig. 13 shows a cross-sectional view along the line 13—13 of figure 12.

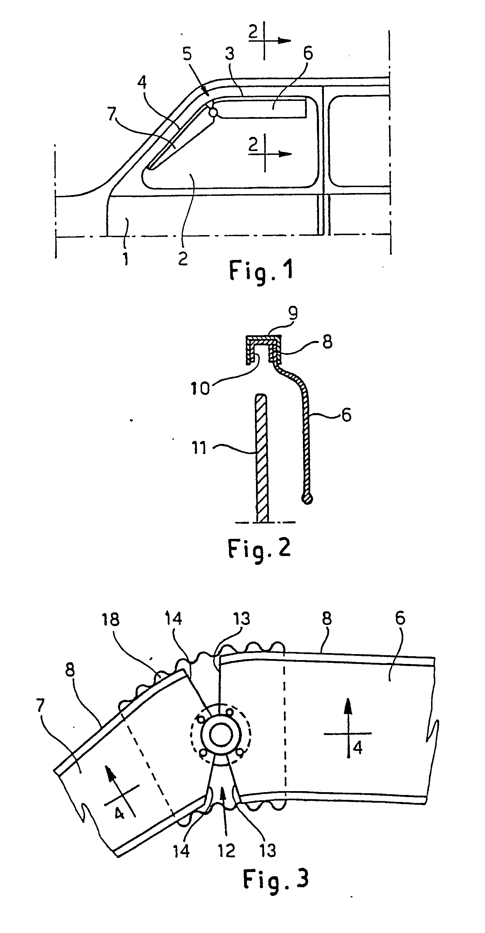

Figure 1 shows a generic motor vehicle 1 in which the window 2 of each front door is provided with a substantially horizontal upper edge 3, and a downward sloping fore edge 4, whose size and angulation depend upon the features of the model of motor vehicle. Reference 5 moreover, indicates a generic air shield comprising a horizontal rear portion 6 and a downward sloping fore portion 7 which tapers off towards the front.

The air shield 5, that is to say, the two portions 6 and 7 of which such shield is made up, may be secured to the edges 3 and 4 of the window 2 in any way, for example, as shown in figure 2, by forcing the upper edge 8 of each shield portion between the metal section 9 running along the edge of the window, and the internal weatherstrip 10, or in any other suitable way. The shield 5 has a suitably-shaped profile, as shown for example in figure 2, so as to remain spaced apart from the plane of the window 2, defined by the glass 11, thus forming a passage between the shield itself and the glass 11 which permits the ventilation of the inside of the motor vehicle and at the same time prevents strong currents of air or water from entering, even with the window wide open.

As mentioned previously, the shield 5 is made up of a downward sloping fore portion 7, ending with a rounded point, and a horizontal rear portion 6; the two shield portions 6, 7 are hinged together by means of a hinge joint 12 situated in an intermediate position. In correspondence with the hinge joint 12, the two shield portions 6, 7 present facing edges 13, 14 which diverge, starting from the joint itself, so as to allow, during the assembling of the shield, a relative rotation which enables the two shield portions 6 and 7 to place their upper edges 8 parallel with the edges 3 and 4 of the window. Therefore, in order that a single shield may adapt to windows having edges with different angulations, it is advisable for the facing edges 13 and/or 14 on at least one of the two shield portions to form an angle ranging from 150° to 180° approximately, without excluding different angles in particular cases. By way of example, and preferably, it is suggested to make the edges 13 and 14 of each shield portion sloping in such a way as to obtain a maximum divergence between the opposing edges 13, 14 on each side of the hinge joint 12, ranging from 20° to 40° approximately. In this way, thanks to the presence of the hinge 12 and the diverging edges 13 and 14, it is possible to assemble the two shield portions with the desired inclination.

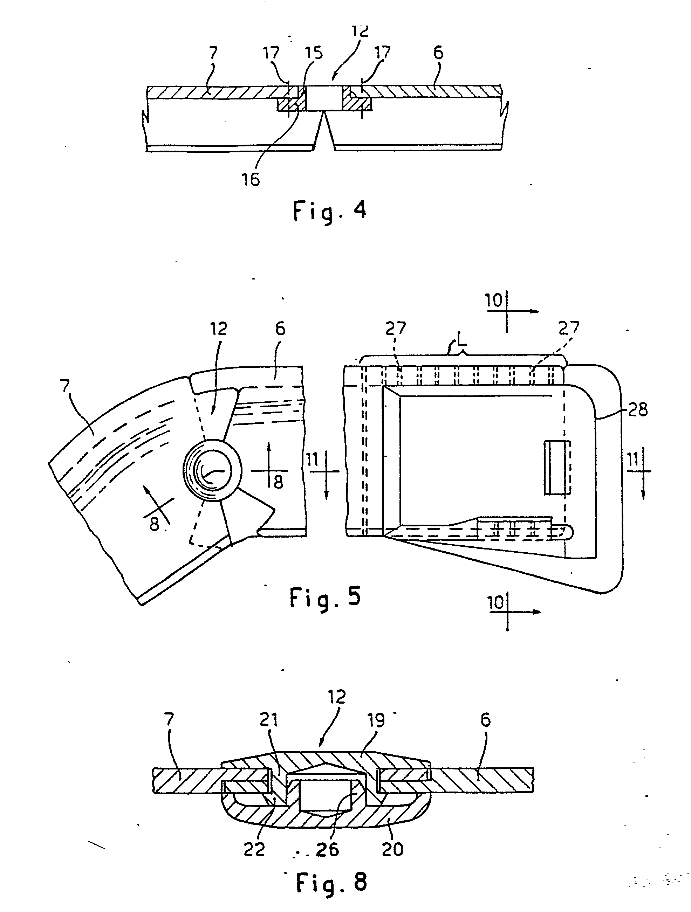

In the specific case shown in figs. 3 and 4, the hinge joint 12 between the two shield portions 6 and 7 is achieved by means of a circular ring 15 which fits into corresponding semicircular seats provided on the two opposing ends of the shield portions 6 and 7; the circular ring 15 is provided with an annular flange 16 which forms a stopping surface for the two aforesaid shield portions. Since the two shield portions 6 and 7, once assembled, with the required angular disposition, no longer need to be moved, said shield portions can therefore be locked in this position by means of screws 17 or the like, screwed into the shield portions themselves and into the annular flange 16 of the hinge element. One of the two shield portions 6, 7 preferably presents ovalized holes, arranged along the arc of a circle concentric to the axis of the hinge 12, in order to allow an initial adjustment to the desired angulation.

Owing to the divergence of the opposing edges 13 and 14, a more or less wide air gap would be created, on one side or both sides of the hinge 12 (fig. 3), through which an annoying draught of air could enter. Therefore, in order to eliminate this possibility, use has been made of airtight means, for example, in the form of a bellows 18 surrounding the two opposing ends of the shield portions 6, 7 and which covers the area relating to the hinge 12, thereby ensuring that the air shield 5 is perfectly airtight.

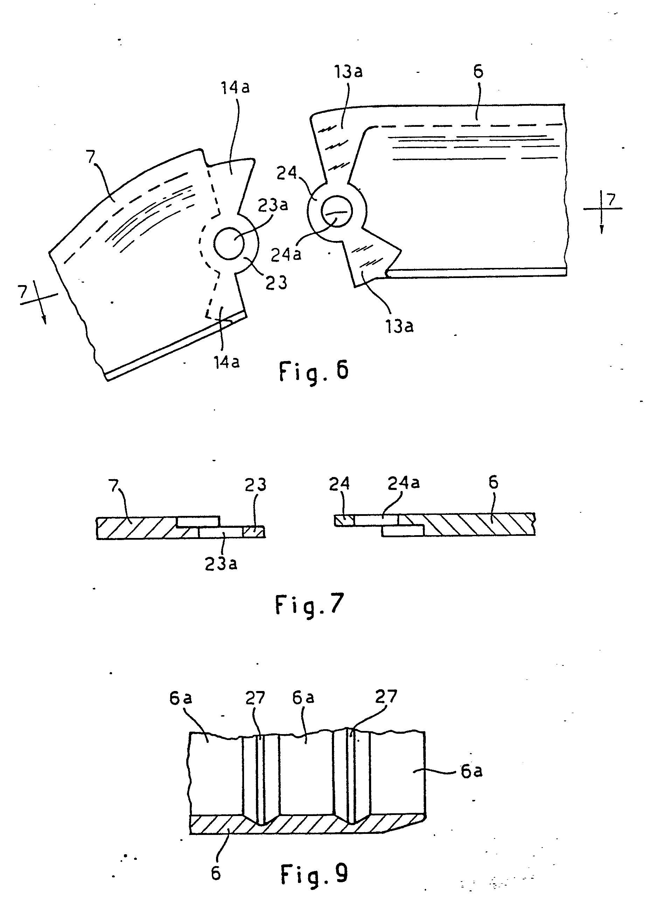

The figures from 5 to 11 show a second embodiment of the air shield according to this invention. Here again, the air shield comprises a rear portion 6 and a fore portion 7, connected by means of a hinge joint 12, shown in the views and cross-sections of figures 6—8; together with figure 5, said figures also show a different way of forming the airtight means in correspondence with the air gap between the opposing edges 13, 14 of the two shield portions. Unlike the previous case, here the hinge joint 12 is composed of two cup-shaped elements 19, 20, one of which, for example, the element 19, is provided with a split hub 21 ending in a radial lip 22 situated at a distance from the internal wall of the element 19, equal to the thickness of each shield portion, as shown; in this way the hub 21 of the hinge element 12 can be forced through aligned holes 23a and 24a in protruding parts 23 and 24 having a thickness equal to half that of the opposing edges 13 and 14 of the two shield portions. The hinge joint 12 comprises moreover, a second cup-shaped element 25, on the opposite side of the shield, provided with a hollow shank 26 which is forced into the hollow hub 21 of the hinge joint, thereby achieving a hinge joint in which the two shield portions are joined by snapping shut, when the shield is fitted onto the window of the motor vehicle.

As mentioned previously, figures 5, 6 and 7 also show a different embodiment of the airtight seal in correspondence with the air- gap which is formed between the opposing edges 13 and 14 of the two shield portions, on one or both sides of the hinge joint 12.

In the case in question, the airtight seal has been achieved by providing each shield portion 6 and 7, in correspondence with their opposing edges and on both sides of the hinge joint 12, with overlapping fins 13a and 14a, which extend over a sufficient angular width to permit adjustment in the inclination of the two assembled shield portions. Said airtight fins 13a and 14a are obviously arranged according to similarly-shaped adjoining surfaces with a thickness always equal to half the thickness of the air shield itself; in this way, by making the hinge joint 12 from transparent plastic material, in the same way as the two shield portions, it is possible to achieve a high degree of lateral visibility.

As mentioned previously, the air shield according to this invention, being made up of two halves hinged together, is able to adapt to the windows of different types of motor vehicles, in which the slope of the fore edge of the window may vary from vehicle to vehicle.

According to a further feature of the air shield claimed in this invention, the latter has been designed also to adapt to windows of different widths. In this connection, the horizontal shield portion 6, as shown in figures 5 and 9, is provided with transversal grooves 27, over a pre-established length L, leading off from the rear end of the shield portion 6, for example, over a third or a quarter of its length; said grooves 27 constitute weakened portions which can be broken off, or easily cut with a tool in order to remove, whenever necessary, one or more bands 6a of the shield portion, of a pre-established modular width, and specially designed according to the actual dimensions of the windows of existing motor vehicles; in this way it is possible to obtain an easy means for adjusting the length of the air shield, especially its horizontal rear portion.

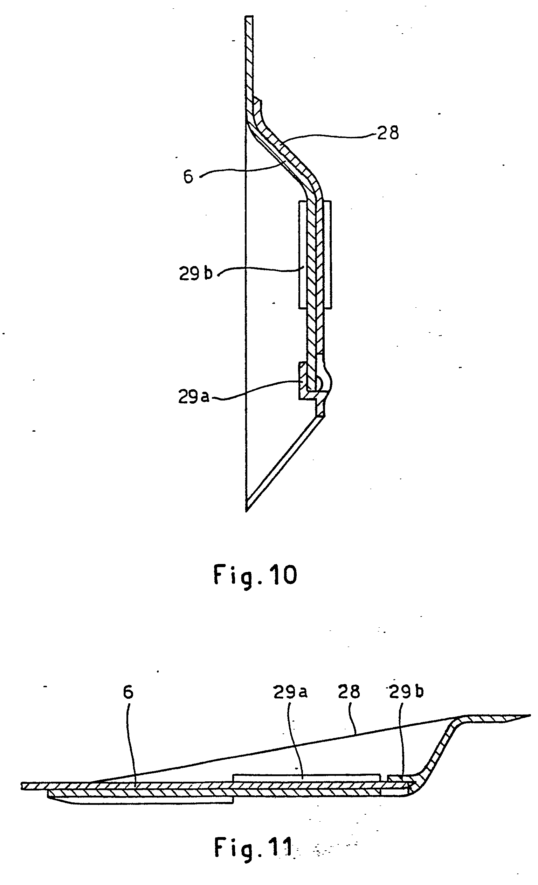

A rim element 27, shown in the views of figs. 5, 10 and 11, is snapped on, or slipped onto the rear cut end of the horizontal shield portion 6. The rim element 27 can be secured in any way, for example, by providing guide means 29a, 29b close to the lower horizontal edge and rear vertical edge respectively.

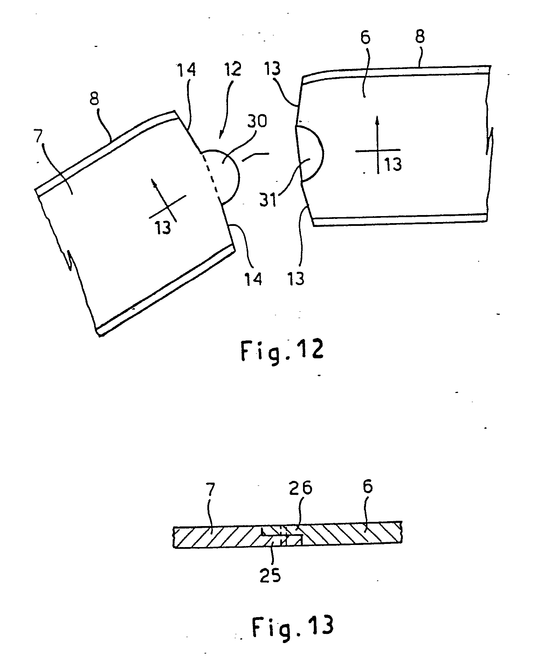

Figures 12 and 13 show a different embodiment of the hinge joint 12 between the two shield portions 6 and 7. In the case of figures 12, 13, the hinge is achieved as an integral part of the air shield itself by providing, for example, a semicircular protrusion 30 at one end of one shield portion, for example, on the shield portion 7, and a matching semicircular seat 31 at the opposite end of the other shield portion, as shown. The rest of the two shield portions correspond exactly to those described previously.

Here too, it is possible, by means of screws, (not shown) to lock the hinge joint 12 in the desired angular disposition.

It will be clear, from what has been described and shown in the accompanying drawings, that the invention consists in the realization of an air shield, made in two parts hinged together, with opposing edges which diverge, from the hinge point itself, thereby permitting angular adjustment when fitting the air shield, according to the angulation of the edges of the window; it is understood therefore that what has been described and shown in the accompanying drawings, is given merely in order to illustrate the various possible solutions within the scope of the innovatory principle set forth herein.

## Claims

1. Air shield suitable for fitting on the windows (2) of the doors of motor vehicles, comprising a horizontal rear shield portion (6) for fitting on the upper horizontal edge (3) of the window, and a fore shield portion (7) for fitting on the downward sloping fore edge (4) of the window, characterized by the fact that said shield portions (6, 7) are joined together by means of a hinge joint (12) and present opposing ends with facing edges (13, 14) diverging from the aforementioned hinge joint 12.

2. Air shield as claimed in claim 1, characterized by the fact that said diverging edges (13, 14) of the two shield portions (6, 7) together form an angle ranging from 20° to 40° approximately.

3. Air shield as claimed in claim 1, characterized by the fact that airtight means (13a, 14a, 18) are provided in correspondence with the air gap defined between the facing edges (13, 14) of the two shield portions (6, 7).

4. Air shield as claimed in claim 3, characterized by the fact that a bellows (18) is provided, which surrounds the opposing ends of the two shield portions (6, 7) in correspondence with the hinge joint (12).

5. Air shield as claimed in claim 3, characterized by the fact that the shield portions, in correspondence with the facing edges (13, 14), are provided with protrusions (13a, 14a) in the form of fins overlapping each other.

6. Air shield as claimed in claim 1, characterized by the fact that said hinge joint comprises two cup-shaped elements (19, 20) defining a hollow hub which snaps onto the shield portions (6, 7).

7. Air shield as claimed in claim 1, characterized by the fact that said hinge joint (12) comprises a flanged ring (15) which fits into matching semicircular seats provided in the opposing edges (13, 14) of the shield portions (6, 7).

8. Air shield as claimed in claim 1, characterized by the fact that said hinge joint (12) consists of a semicircular protrusion (30) on one of the shield portions, which fits into a semicircular seat (31) in the other shield portion, in correspondence with the respective opposing edges (13, 14).

9. Air shield as claimed in claim 1, characterized by the fact that the horizontal shield portion (6) is provided, starting from its rear end, with an area (L) provided with transversal breaking grooves (27).

10. Air shield as claimed in claims 1 and 9, further characterized by a rear rim element (28) which can be fitted in correspondence with the area (L) provided with transversal grooves for breaking off parts of the horizontal shield portion (6).

11. Air shield as claimed in claim 9, characterized by the fact that said breaking grooves (27) define breakable modular bands (6a) on the rear shield portion (6).

## Patentansprüche

1. Entlüftungsleiste, geeignet zur Befestigung an den Fenstern (2) von KFZ-Türen, bestehend aus einem zur Befestigung am oberen, waagrechten Fensterrand (3) geeigneten hinteren waagrechten Leistenteil (6) und aus einem vorderen Leistenteil (7) zur Befestigung am schräg abfallenden vorderen Fensterrand (4), dadurch gekennzeichnet, dass die genannten Leistenteile (6, 7) miteinander durch ein Drehgelenk (12) verbunden sind und dass sie entgegengesetzte Enden mit Rändern (13, 14), die divergent zum obengenannten Drehgelenk angeordnet sind, aufweisen.

2. Entlüftungsleiste gemäss Anspruch 1 dadurch gekennzeichnet, dass die genannten divergenten und entgegengesetzten Ränder (13, 14) der beiden Leistenteile (6, 7) in einem Winkel von ca. 20 bis 40° zueinander angeordnet sind.

3. Entlüftungsleiste gemäss Anspruch 1, dadurch gekennzeichnet, dass in übereinstimmung mit dem Schlitz (air gap) zwischen den entgegengesetzten Rändern (13, 14) der beiden Leistenteile (6, 7) Luftabdichtmittel (13a, 14a, 18) vorgesehen sind.

4. Entlüftungsleiste gemäss Anspruch 3, dadurch gekennzeichnet, dass ein Balg (18), welcher die entgegengesetzten Enden der beiden Leistenteile (6, 7) in übereinstimmung mit dem Drehgelenk (12) umschliesst, vorgesehen ist.

5. Entlüftungsleiste gemäss Anspruch 3, dadurch gekennzeichnet, dass die Leistenteile in übereinstimmung mit den entgegengesetzten Rändern (13, 14) Vorsprünge (13a, 14a) in Form von übereinanderliegenden Rippen aufweisen.

6. Entlüftungsleiste gemäss Anspruch 1, dadurch gekennzeichnet, dass das genannte Drehgelenk (12) zwei tassenförmige Elemente (19, 20) aufweist, die eine Hohlnabe bilden und in welche die beiden Leistenteile (6, 7) einrasten.

7. Entlüftungsleiste gemäss Anspruch 1, dadurch gekennzeichnet, dass das genannte Drehgelenk (12) einen Flanschring (15) umfasst, der in die entsprechenden halbkreisförmigen, in den entgegengesetzten Rändern (13, 14) der beiden Leistenteile (6, 7) angebrachten Aufnahmen passt.

8. Entlüftungsleiste gemäss Anspruch 1, dadurch gekennzeichnet, dass das genannte Drehgelenk (12) aus einem halbkreisförmigen Vorsprung (30) auf einem der Leistenteile, welcher in eine passende halbkreisförmige Aufnahme auf dem anderen Leistenteil greift, besteht, in übereinstimmung mit den entsprechenden entgegengesetzten Rändern (13, 14).

9. Entlüftungsleiste gemäss Anspruch 1, dadurch gekennzeichnet, dass das waagrechte Leistenteil auf seinem hintern Ende einen Bereich (L) aufweist, welcher mit quer angeordneten Bruchrillen (27) versehen ist.

10. Entlüftungsleiste gemäss Anspruch 1 und 9, desweiteren durch ein hinteres Verkleidungselement (28) gekennzeichnet, das in übereinstimmung mit dem Bereich (L), welcher mit Bruchrillen (27) zum Abtrennen von Abschnitten des waagrechten Leistenteils (6) versehen ist, angebracht werden kann.

11. Entlüftungsleiste gemäss Anspruch 9, dadurch gekennzeichnet, dass durch die genannten Bruchrillen (27) die abtrennbaren Abschnitte (6a) des hinteren Leistenteils (6) bestimmt werden.

**Revendications**

1. Déflecteur à ailette apte à être fixée aux vitres (2) du portiéres des véhicules automobiles, comprenant une partie d'ailette horizontale postérieure (6) apte à être fixée au bord horizontal supérieur (3) de la vitre, et une partie d'ailette antérieure (7) destinée à être fixée au bord anterieur (4) incliné vers le bas de la vitre, caractérisé par le fait que dites parties d'ailette (6, 7) sont reliées entre elles au moyen d'un joint formant charniére (12) et présentent des extrémités opposées avec des bords vis-à-vis (13, 14) divergents à partir du joint à charnière (12) susindiqué.

2. Ailette selon la revendication 1, caractérisée par le fait que les susdits bords divergents (13, 14) des deux parties d'ailette (6, 7) forment entre eux un angle compris entre 20° et 40° environ.

3. Ailette selon la revendication 1, caractérisée par le fait que des moyens d'étanchéité à l'air (13a, 14a, 18) sont prévus en correspondance de la fissure definie entre les bords vis-à-vis (13, 14) des deux parties d'ailette (6, 7).

4. Ailette selon la revendication 3, caractérisée par le fait qu'un soufflet (18) est prévu, entourant les extrémités opposés des deux parties d'ailette (6, 7) en correspondance du joint formant charniére.

5. Ailette selon la revendication 3, caractérisée par le fait que les parties d'ailette, en correspondance des bords opposés (13, 14) présentent des saillies (13a, 14a) sous forme d'ailettes superposables entre elles.

6. Ailette selon la revendication 1, caractérisée par le fait que le susdit joint formant charniére comprend deus éléments à godet (19, 20) definents un moyeu creux que se declenche sur les parties d'ailette (6, 7).

7. Ailette selon la revendication 1, caractérisée par le fait que le susdit joint formant charnière (12) comprend une bague bridée (15) qui s'adapte dans les sièges centreurs semicirculaires formès dans les bords opposès (13, 14) des parties d'ailette (6, 7).

8. Ailette selon la revendication 1, caractérisée par le fait que le susdits joint formant charniére (12) est constituée par une saillie semi-circulaire (30) de l'une des parties d'ailette qui s'adapte dans un logement semi-circulaire (31) dans l'autre partie d'ailette, en correspondance des bords opposés respectifs (13, 14).

9. Ailette selon la revendication 1, caractérisée par le fait que la partie d'ailette horizontale (6) présente à partir de son extrémité postérieure, une zone (L) munie des rainures transversaux de rupture (27).

10. Ailette selon les revendications 1 et 9, ultérieurement caractérisée par un élément (28) de bordure postérieur qu'il peut être applique en correspondance de la zone (L) formée par des rainures transversaux (27) de rupture, de la partie d'ailette horizontale (6).

11. Ailette selon la revendication 9, caractérisé par le fait que les susdites raïnures de rupture (27) définissent des bandes d'ailette modulaires (6a) cassables.

Fig. 1

Fig. 2

Fig. 3

Fig. 4

Fig. 5

Fig. 8

Fig. 6

Fig. 7

Fig. 9

Fig. 10

Fig. 11

Fig. 12

Fig. 13